(19) Europäisches Patentamt
European Patent Office
Office européen des brevets

(11) **EP 3 835 828 A1**

(12) **EUROPEAN PATENT APPLICATION**

(43) Date of publication:
**16.06.2021 Bulletin 2021/24**

(51) Int Cl.:
***G01T 1/161*** *(2006.01)*     ***G01T 1/17*** *(2006.01)*

(21) Application number: **19215109.0**

(22) Date of filing: **11.12.2019**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>**KH MA MD TN**<br><br>(71) Applicant: **Koninklijke Philips N.V.**<br>**5656 AG Eindhoven (NL)** | (72) Inventor: **SALOMON, Andre Frank**<br>**5656 AE Eindhoven (NL)**<br><br>(74) Representative: **Philips Intellectual Property & Standards**<br>**High Tech Campus 5**<br>**5656 AE Eindhoven (NL)** |

(54) **AI-BASED SCINTILLATOR RESPONSE MODELLING FOR INCREASED SPATIAL RESOLUTION IN PET**

(57)     A system (PP) and related methods for supporting nuclear imaging such as PET or other. The system comprises an input interface (IN) for receiving event data that represents an interaction event of gamma-radiation with a scintillator (SC) of a nuclear imaging apparatus (NIA). A pre-trained machine learning component (MLC) estimates a point spread function, PSF, for the said event. An output interface (OUT) outputs a representation of the PSF. The PSF may be used in emission image reconstruction for improved spatial resolution.

**FIG. 1A**

**FIG. 1**

EP 3 835 828 A1

**Description**

FIELD OF THE INVENTION

The invention relates to a system of supporting nuclear imaging, to a nuclear imaging arrangement, to a system for training a machine learning component for supporting nuclear imaging, to a method for supporting nuclear imaging, to a method of training a machine learning component for nuclear imaging, to a method of generating training data for training a machine learning component for nuclear imaging, to a computer program element, and to a computer readable medium

BACKGROUND OF THE INVENTION

Positron emission imaging (PET) aims at a high resolution and high sensitivity which both define diagnostic accuracy and clinical value. The question of where the first point of interaction on a PET scintillator occurred is of relevance for an accurate high-resolution PET reconstruction.
While the design of the scintillator material like crystal pitch (for non-monolithic crystals) and crystal length define a theoretically achievable spatial resolution of a PET system, other secondary effects like Compton and Rayleigh-scattering in the crystals have a negative impact on the PET spatial resolution.

SUMMARY OF THE INVENTION

There may therefore be a need for improving nuclear imaging.
The object of the present invention is solved by the subject matter of the independent claims where further embodiments are incorporated in the dependent claims. It should be noted that the following described aspect of the invention equally applies to the nuclear imaging arrangement, to the system for training a machine learning component for supporting nuclear imaging, to the method for supporting nuclear imaging, to the method of training a machine learning component for nuclear imaging, to the method of generating training data for training a machine learning component for nuclear imaging, to the computer program element, and to the computer readable medium
According to a first aspect of the invention there is provided a system for supporting nuclear imaging, comprising:

an input interface for receiving event data that represents an interaction of gamma-radiation with a scintillator of a nuclear imaging apparatus;
a pre-trained machine learning component for estimating a point spread function ("PSF"), for the said event; and
an output interface for outputting a representation of the PSF.

According to one embodiment, the system comprises a reconstruction module operable to implement a reconstruction algorithm to reconstruct from plural such event data and their estimated PSFs, an emission image.
According to one embodiment, the pre-trained machine learning component includes a neural network model.
According to one embodiment, the said event data includes instances of one or more observables that represent in-scintillator interaction of a gamma radiation. The observable may include position data for responding detector elements, or a list of respective energy deposition measurements, or functions derived from such observable such as averages or other quantities. Optionally, the event data may also include incident angular data that describe the impact direction of each gamma in pair. Preferably, the event data relates to a pair of gammas, each gamma being described by its own set of observable(s). There are preferably two PSFs computed, one for each gamma in a pair of coincident gammas. Each instance of event data (event datum) may describe the two gammas in combination, of each datum relates to one of the gamma, and the event data is obtained and processed separately, one after the other.
According to one embodiment, the PSF representation is 2-dimensional or 3-dimensional. The 3D representation allows achieving even higher spatial resolution, in particular in connection with time-of-flight refinements.
According to one embodiment, the reconstruction algorithm includes tube-of-response modelling based on the PSFs.
The method as proposed herein allows fast and memory saving computation to estimate the PET detector response function PSF per detection event. The detection event as captured in the event data describe single gamma photon versus scintillator crystal interaction. In embodiments, a deep neural network is trained to predict the PSF as a 2D or 3D probability distribution of the location first interaction of the gamma photon within or with the scintillator crystal for each of the two coincident 5 1 IkeV gamma photons (*"gamma(s)"*).
The PSF estimation is based on input information that includes the event data. The event data includes spatial/positional data and may also include angular data. The positional data comprises locations of energy depositions as detected by detector elements of the nuclear imager's detector unit. The angular data measures the direction of impact of a gamma. The angular data may be (pre-)computed from the observable or functions thereof.

The observable or function thereof may include in embodiments, the most likely crystal index, as an estimate for the location of first interaction of the respective gamma. This estimate may be provided by an Anger logic or singles processing system, or any other positional resolver. Preferably however, the observable data can be more detailed, such as a vector, eg, a list of detector responses, or a list of crystal indices with corresponding energy depositions or equivalent weights which all belong to a single gamma event. The observable data may even be a matrix with entries indicating positions of all detector elements that responded, possibly augmented with the respective energy values as detected by the respective detector element. In general, the observable data include for each of the two coincident gammas of a pair a representation of detector elements that were activated by the said gammas. In general, the observable data, or function thereof, as envisaged herein may comprise any data representation of detector element responses that were triggered by the same gamma. The angular data includes incident angle of each coincidently detected gammas.

The PSF may be represented as an estimate for the conditional probability distribution of locations of first gamma-scintillator interaction, given an instance of the observable. Using the PSFs as computed herein allows a more accurate modelling of a tube-of-response and/or correction for blurring artifacts introduced by scattering interactions in the scintillator material, such as crystal. Specifically, the proposed method allows for better emission image reconstruction with improved spatial resolution, despite adverse scattering effects in the scintillator that tend to bring down spatial resolution, especially in crystal configurations with small crystal pitch and/or several "Depth-of-Interaction" (DOI) layers.

The proposed machine learning approach is capable to account for complexities due to the large number of parameters that need to be considered (i.e. detector geometry, patient attenuation). In addition, the trained machine learning component can be efficiently saved with lower memory space requirements, compared to lookup-tables for example.

In another aspect there is provided a nuclear imaging arrangement comprising:

system of any one of the above mentioned embodiments; and
the nuclear imaging apparatus.

In another aspect there is provided a system for training a machine-learning component for supporting nuclear imaging, comprising:

input interface for receiving training input event data representative of gamma-radiation interaction with scintillator material;
a tester for applying the training input event data to a machine learning model to obtain training output data;
an updater configured to update one or more parameters of the model based on a deviation between the training output data and a target associated with the input event data, the target representing an expected PSF.

In embodiments, the training input event data previously obtained, based on measurement or simulation.

In embodiments, the simulation is based on a Monte-Carlo-simulation algorithm.

In another aspect there is provided a method for supporting nuclear imaging, comprising:

receiving event data that represents an interaction of gamma-radiation with a scintillator of a nuclear imaging apparatus;
estimating, based on a pre-trained machine learning component, a point spread function, PSF for the said event;
outputting a representation of the PSF.

In another aspect there is provided a method of training a machine-learning component for supporting nuclear imaging, comprising:

receiving training input event data representative of gamma-radiation interaction with scintillator material;
applying the training input event data to a machine learning model to obtain training output data;
adjusting one or more parameters of the model based on a deviation between the training output data and a target associated with the input event data, the target representing an expected PSF.

In another aspect there is provided a method of generating training data for training a machine-learning component for supporting nuclear imaging, comprising:

simulating a gamma photon versus crystal interaction to obtain, for a set of prescribed locations of first gamma-phono versus crystal interaction, one or more instances of an observable; and
estimating, based on a given one of the said instances and on counts of said prescribed locations, a representation of a PSF for the given one of said observable instance.

Specifically, based on a given one of the said instances, a distribution of said prescribed locations is estimated to obtain a representation of a PSF for the given one of said instance.

Multiple simulations are run for each prescribed location. A given observable may hence occur a number of time and this number is counted to obtain an estimate for the distribution. The PSF is an estimate for the conditional probability distribution of the locations given an instance of the observable.

In another aspect there is provided a computer program element, which, when being executed by at least one processing unit, is adapted to cause the processing unit to perform the method as per any one of the above mentioned aspects or embodiments.

In another aspect there is provided a least one computer readable medium having stored thereon the program element.

In general, a *"machine learning component"* is a computerized arrangement that implements, or facilitates implementation, of a *"machine learning"* (*"ML"*) algorithm. The machine learning model may be based on a ML *"model"*. The ML component is configured to perform a task. In an ML algorithm, task performance improves measurably after having provided the arrangement with more and more training data. The model is adapted based on the training data. The performance may be measured by objective tests when feeding the trained model with test data. The performance may be defined by requiring a certain error rate to be achieved for the given test data. See T. M. Mitchell, "Machine Learning", page 2, section 1.1, McGraw-Hill, 1997. The task of main interest herein is the estimation of point spread function per event datum.

BRIEF DESCRIPTION OF THE DRAWINGS

Exemplary embodiments of the invention will now be described with reference to the following drawings, which are not to scale, wherein:

Figure 1 shows a schematic block diagram of a nuclear imaging arrangement;
Figure 2 shows a block diagram of a system for supporting nuclear imaging;
Figure 3 is a flow chart of a method of supporting nuclear imaging;
Figure 4 shows a schematic block diagram of a method of training a machine learning component for use in a system for supporting nuclear imaging; and
Figure 5 shows a flow charts of a method of training a machine learning component for use in nuclear imaging support and of a method of generating training data.

DETAILED DESCRIPTION OF EMBODIMENTS

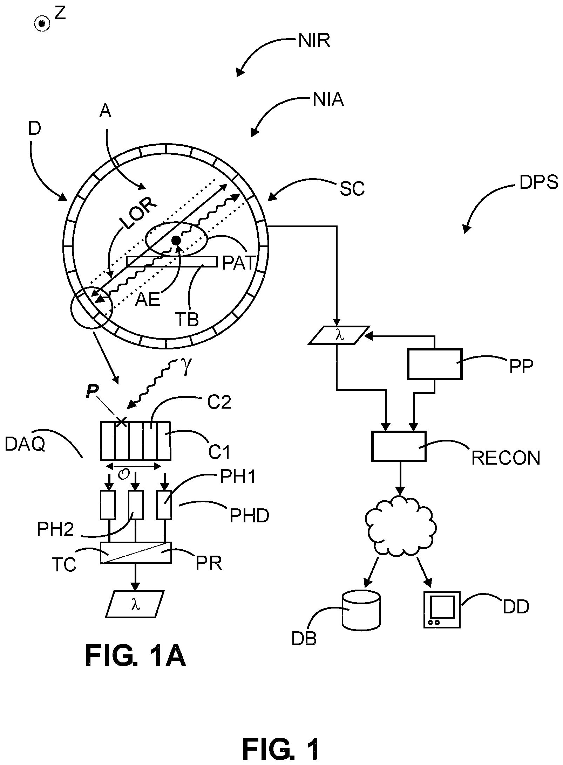

With reference to Figure 1, there is shown a schematic block diagram of a nuclear medicine imaging arrangement NIR.

The arrangement NIR includes a nuclear imaging apparatus NIA and a data processing section DPS. Broadly, the nuclear imaging apparatus NIA outputs emission projection imagery $\lambda$ which can be processed in the data processing section DPS into emission imagery $I^{em}$ that can be stored in a data base such as a PACS in a HIS or any other memory DB. The emission imagery may be visualized on a display device DD or can otherwise be processed. The emission projection data $\lambda$ can be provided by wired or wireless connection from the imaging apparatus NIA to the data processing section DPS.

Explaining now in more detail operation of the nuclear imaging apparatus NIA, reference is now made to a PET imager. However, other nuclear or emission imaging modalities such as SPECT or planar scintigraphy are also envisaged herein, and the principles to be described herein are applicable to such other emission imaging modalities also.

The PET imager NIA is usually, but not necessarily, arranged in tandem with an MRI imager or a computed tomography scanner CT. MRI or CT provide structural information about an anatomy, whilst the PET imager provides functional information, including for example organ activity.

Broadly, the PET imager NIA includes a gantry in which it is arranged, around a hollow examination region A, an annular detector unit D. The annular detector unit D comprises am annular scintillator SC. Prior to imaging, a radio tracer substance is administered to the patient PAT. The substance includes a suitable radionuclide. The administered substance distributes in the patient's body, and the patient is made to lie on an examination table TB. The table TB, with the patient PAT on it, is then slid into the examination region as shown in side elevation in Figure 1 so that at least an anatomy of interest (ROI) is now completely surrounded by the scintillator SC ring. A longitudinal axis of the patient PAT is aligned with an imaging access Z which extends perpendicularly into the drawing plane of Figure 1.

The scintillator ring SC, of which there can be more than one arranged one after the other along the Z axis, is essentially a gamma camera. In more detail, the administered and accumulated radionuclide disintegrates after a certain amount of time to produce a decay event. This decay event results in a positron being emitted. The positron after its creation travels usually a short distance and then interacts with surrounding patient tissue. More particularly, the positron collides at a certain location with an encountered electron in patient tissue. This collision results in an annihilation event AE at said in-patient location. The annihilation of the two colliding elementary particles, the positron and electron, in turn creates a pair of $\gamma$ photons, referred to herein as $\gamma 1$, $\gamma 2$ or "gammas", or "gamma" for either one. These $\gamma$ photons are known to have defined energy values of 511keV. The $\gamma$ photons of each pair travel in opposite direction at 180° from the creation site AE towards different, diametrically located, portions of the scintillator ring SC and are then incident thereon. The scintillator ring comprises blocks of crystals contiguously arranged in the ring. Each crystal block has two surfaces. One surface, the proximal surface, faces towards the center of the examination region A and hence the patient, whereas the other, the distal surface, is opposite thereto and faces away, outside the ring SC.

The distal scintillator surfaces are coupled to a bank of photodiodes PHD as shown in inset Figure 1A. Fig 1A represent a close-up of a portion of the detector D's data acquisition section DAQ. The crystal block may be structured into crystal components C1, C2 to form a pixelated crystal design. The proximal surface is hence made up of a matrix of inward facing surface sections of each crystal component, and the distal surface of the block is formed from a similar matrix of opposed outward facing surface sections. In embodiments the crystal components are elongated structures sometimes referred to as needles having a proximal inward facing section of approximately $4 \times 4mm^2$ in cross-section, and the needles being about 30mm in length with the length extending radially. Other dimensionings are also envisaged and so are monolithic blocks without such structuring. Preferably, when so pixelated, each of those crystal needles C1, C2, shown in cross section in the inset of Figure 1A, is coupled to a corresponding photodiode PH1,PH2 at their outward facing distal surface sections. There may therefore be in embodiments a one-to-one spatial correspondence between crystal needles and "their" photodiodes. A crystal element C1, C2, together with its spatially associated one or more photodiodes PHI, PH2, may be referred to herein as a "detector element". The photodiodes PHI, PH2 are coupled to further circuitry such a position resolver PR circuity and timing circuitry TC, both of which will be discussed in more detail further below.

Referring now first back to the $\gamma$ photons in more detail, these are, as said, incident on the respective proximal surfaces of diametrically opposed crystal blocks of the scintillator ring SC as shown schematically in Fig 1. Each gamma photon is incident on a certain surface section, that is pixel, of a given crystal element, say C1, and then interacts within the crystalline structure of the block, to cause a cascade of other interactions due to absorption (e.g. photoelectric effect) and/or Compton and other scattering effects such as Rayleigh scattering. The interactions result in energy depositions in the crystal.

Generally, the interactions are not spatially confined to the crystal element that was originally hit at P by the incoming $\gamma$ photon. Rather, the interactions "spill over" into other crystal elements C2, the neighboring ones and possibly beyond, resulting in the crystal block releasing a cloud of flashes, one for each interaction or energy depositions. Each flash corresponds to light photons. In other words, the crystalline scintillator structure SC acts as a transducer to translate the $\gamma$ photons into a cloud of light photons due to interactions with the crystal. The optical photons are registered by the photodiodes PH1,PH2 that are coupled to the affected crystal elements C1, C2. The photodiodes PH1,PH2 respond to the light photons by outputting a related electrical signal, such as voltage or current. Because of the above described structure of the interaction which results not in one, but plural optical photons, there may be a group of more than one responding photodiodes PHI, PH2 that produce a plurality of electrical signals. Each incoming gamma may hence be said to "activate" certain groups of detector elements. The electrical signals are proportional to the energies of the respective energy depositions. Each crystal block, or more particularly each crystal element, C1, C2 in the scintillator ring SC can be indexed by a unique position indicator X. This position index $X$ is then also one of the detector element, in particular one of the photodiode which is coupled to the respective crystal.

The respective group of activated detector elements may thus be characterized by a list of their indices $(X_j)$ for each gamma. There are two of such lists for each pair of gammas. It will be convenient herein to let the said indices $(X_j)$ also refer to the active photodiodes or active crystals that make up the activated detector elements.

Referring now in more detail to the position resolver circuitry PR, this may include an Anger logic or a singles processing units or others. The position resolver circuitry PR receives the electrical signals as detected by the activated photodiodes in the photodiode array section PHD. The position resolver circuitry PR provides, based on the list of activated photodiodes, an estimate x of the index $P$ where the first incident occurred. In other words, x is a (possibly rough) estimate for which of the crystal elements C1,C2 was hit first by the respective $\gamma$ photon. The estimate may be computed as an average of the indices $(X_j)$ of the activated detector elements, such as an energy weighted mean as returned by the Anger logic, or any other function of the indices of the activated detector elements. It will be understood that what has been described above applies to both of the paired photons $\gamma 1, \gamma 2$. In other words, to each of the gamma photon $\gamma 1, \gamma 2$ in the pair there is assigned a respective estimate x1,x2 as provided by the position resolver circuitry PR for the locations of the respective first interactions PH1,PH2. The estimated locations $x1, x2$ are approximately diametrically located across the region A of scintillator ring SC.

As will be appreciated from the above, each of the two gamma photons $\gamma 1, \gamma 2$ in a pair will give rise to respective detection events. The detection events include the electrical signals produced by the respective responding photodiodes PHD. These two detection events need to be associated with each other so that the two gamma photons $\gamma 1, \gamma 2$ can be recognized to constitute a pair caused by the same annihilation event. This association is time based and done by a timing circuit TC. The detection events that occur at roughly the same time, up to a certain time allowance, are registered by the timing circuit TC as coincidental and constitute detection events of timing circuit photons $\gamma 1, \gamma 2$ making up a pair for a single annihilation event. Once recognized by the timing circuit TC as a pair, their respective estimated location of impact $x1, x2$ as provided by the position resolver PR constitute then for each pair a line of response LOR. The LOR forms the geometric line that connects the two locations $x1, x2$ of first interaction. The two locations $x1, x2$ further determine a direction of impact which can be quantified by angular co-ordinates $\phi, \theta$ for each gamma in terms of elevation and azimuth.

The output of the data acquisition section DAQ, that is the emission projection data $\lambda$, can hence be understood as a list of entries, one for each gamma photon pair. Each entry for a given pair defines a LOR ("line of response"). The LOR can be specified by the respective indices $x1, x2$ for the respective locations of first interaction as estimated by the position resolver PR, and angular data $\phi, \theta$ that represent the direction of the impact of the respective gamma on the respective proximal inward surface sections of the scintillator SC. In other words, each entry comprises a geometrical line of response, the "LOR", which connects the two crystal positions $x1, x2$ data, further comprises the respective directional or angular data $\phi 1, \theta 1$ and $\phi 2, \theta 2$. These data items, $(x1, x2)$ and $(\phi 1, \theta 1; \phi 2, \theta 2)$, will hence be referred to as the positional data and the angular data. The positional data and the angular data together define what will be referred to herein as "event data", that is, data that describes $\gamma$ photon versus crystal interaction. The impact angles $\phi 1, \theta 1$ and $\phi 2, \theta 2$ may be computed by the anger logic or Singles Processing system. The computation is relatively robust as the diameter of the scintillator ring SC is sufficient large, in the order of about 60cm or similar.

However, the above definition of event data is merely according to one embodiment, and other embodiments for representation of the said event data are also envisaged herein. In order to describe the said other embodiments, it may useful first to introduce interaction observables $\mathcal{O}$. The interaction observable $\mathcal{O}$ (or simply "observable $\mathcal{O}$") comprises data in scalar, vector or matrix form, or even of higher dimension. The interaction observable $\mathcal{O}$ describes the gamma-in-crystal interaction in terms of measurable data or a function thereof. The estimates $x1, x2$ returned by the positional resolver PR as mentioned above are one such scalar embodiment of the interaction observable $\mathcal{O}$ as function of the indices $(X_i)$ of the activated detector elements. Specifically, the observable $\mathcal{O}$ in this embodiment may be a single crystal index obtained by averaging the indices in the list $(X_i)$. In a preferred embodiment however, the interaction observable $\mathcal{O}$ is higher dimensional and includes for each gamma all or a subset of the indices $(X_i)$ of the activated detector elements. In embodiments, a further refinement is envisaged where the interaction observable $\mathcal{O}$ includes a localized list of energy depositions in the activated detector elements, which may be written as $(E_{(X_i)})$, where "$E$" denoting the energy depositions in crystal of index Xi, or, said differently, as detected by the associated photodiode at said index $X_i$. As the crystal or pixel indices may have matrix layout, the energy values can be formatted into a matrix, to obtain "energy image" as the interaction observable $\mathcal{O}$. One may also format there the list $(X_i)$ itself as matrix to obtain a "binary image", with entry "1" or "0" to indicate whether the respective detector element was active or not for a given gamma. In general, the interaction observable $\mathcal{O}$ could be any representation of detector responses triggered by an interacting, eg absorbed, gamma photon.

The output data of the data acquisition section DAQ, the emission projection data $\lambda$, can thus be described more generally in terms of interaction observables as

$(\mathcal{O}_1, \mathcal{O}_2)$ and $(\phi 1, \theta 1; \phi 2, \theta 2)$. It is especially the above discussed higher dimensional format of the observable $\mathcal{O}$, such as the list $(X_i)$, binary or energy image that is preferred herein as more accurate image reconstruction with higher spatial resolution can be obtained with this type of observables $\mathcal{O}$.

Because of the manner of interaction of the incoming $\gamma$ photon with the crystal structure, which results in the said cloud of light photons, the observable $\mathcal{O}$ is merely an indirect measurement that relates to the true first impact location $P$ of the gamma. But the true location $P$ of first interaction as such is not known. There is still an uncertainty attached to as to the true location of first interaction $P$.

It is proposed herein then to include this uncertainty into the modeling of the $\gamma$-versus-scintillator interaction and to model this as a "tube of response" TOR as indicated in dashed lines in Figure 1 rather than as a LOR. In other words, the proposed data processing section DPS includes a component PP that transforms some or each event datum in the projection data $\lambda$ into a respective point spread function ("PSF") that describes this uncertainty. The PSF describes in particular absorption and scattering events that occurred within the crystal after $\gamma$ photon impact. Each PSF for each gamma in each pair of gammas give rise to the pair's own tube of response.

What is proposed herein, is a point spread function provider PP that processes the PET projection raw data as described above into point spread function ("PSF") representations per event data. The PSF can be represented either in 2D or 3D. The PSFs per event data are provided to an emission reconstruction unit RECON that incorporates the PSFs into an emission reconstruction algorithm. The reconstruction may be e.g. based on Maximum-Likelihood Expectation Maximization (MLEM), ordered subset expectation maximization (OSEM), or filtered back-projection (FBP), or other. Some reconstruction algorithms such as MLEM or OSEM proceed iteratively. The reconstruction unit receives the point spread function descriptions of the original projection data and computes therefrom emission imagery $I^{em}$ at high spatial resolution, of for example, less than 5mm, or even less than 1mm.

The PSF as computed herein represent a modeling of intra-crystal scattering for improving spatial resolution in the reconstructed imagery. The reconstructor RECON accepts a more complex representation for event data, which is not merely a LOR between two diametrically situated crystals as was used previously in PET reconstructions. The PSF as computed herein by the PSF provider PP is a probability distribution for the location of first interaction and the PSF accounts in particular for the scattering processes involved in the γ-versus-crystal SC interaction. The PSF will be discussed more fully below.

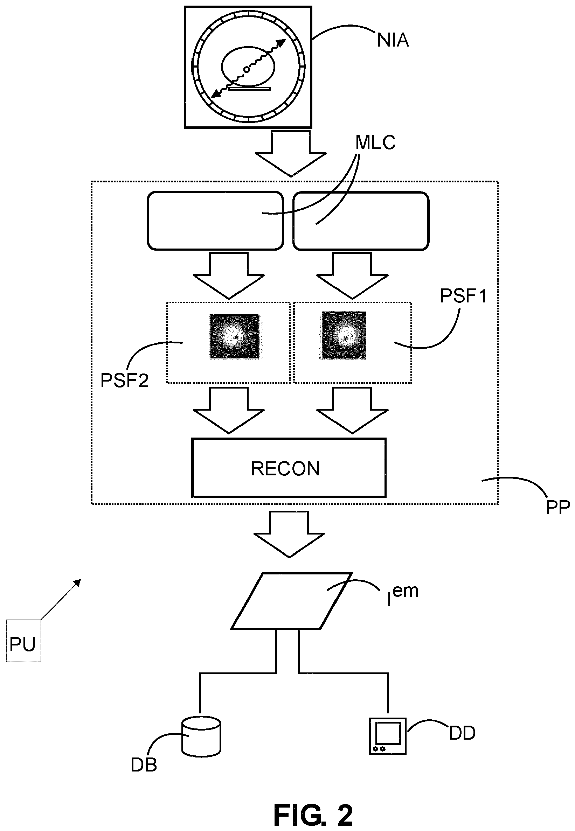

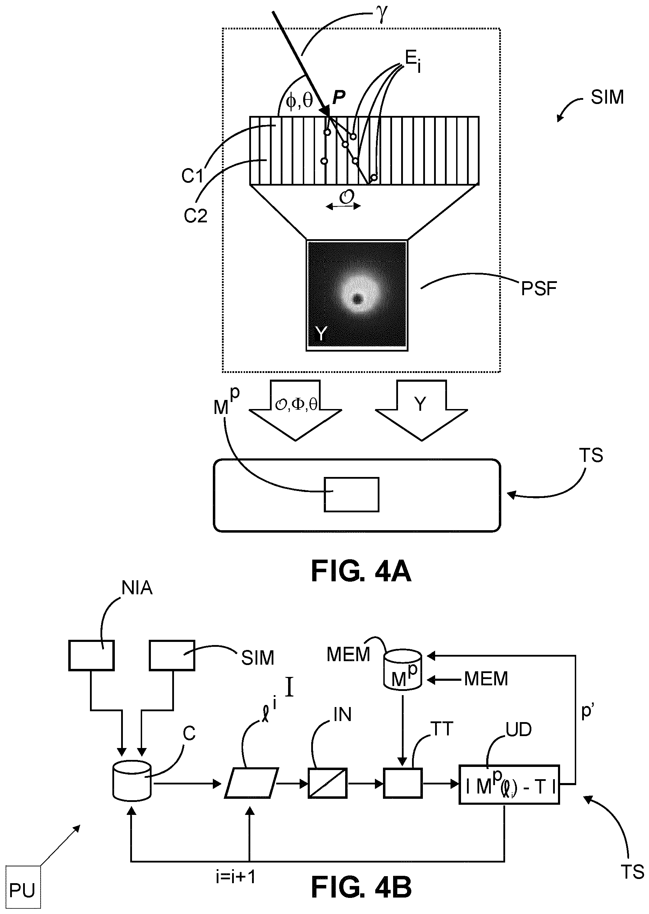

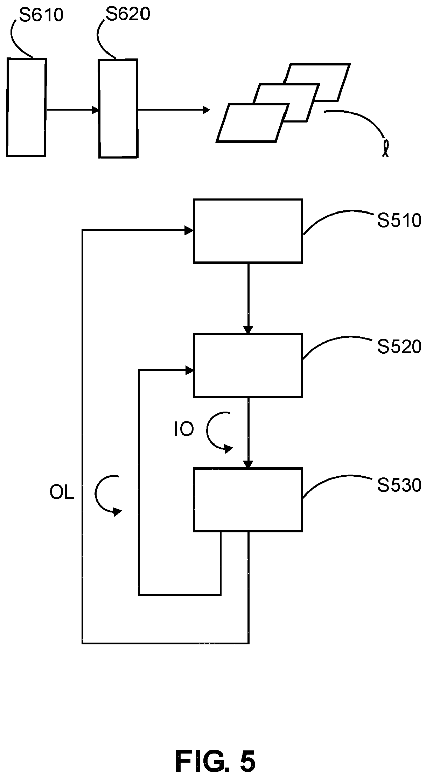

Operation of the PSF provider PP will now be described in more detail with reference to the block diagram in Figure 2. Preferably, and as is envisaged herein, the spread function provider PP includes a machine learning component MLC. The machine learning component may be based on a machine learning model M such as a neural network or other. The machine learning model M has been pre-trained as envisaged herein on a corpus C of training data which will be explored more fully below at Figures 4 and 5.

Assuming for now that the machine learning component has been fully trained based on such training data, operation during deployment, that is after training, may then be understood as follows.

With continued reference to Figure 2, operation of the PSF provider PP will now be explained for the no-limiting embodiment where a function of observables $\mathcal{O}$ are used, such as the estimates x1,x2 provided by the position resolver PR. Initially, projection data λ is acquired by PET imager NIA, for example in the format of list-mode data, but sinogram mode is also envisage herein. For each coincident event datum, i.e., gamma1 and gamma2, the observable data, such as positional data within a crystal stack is computed x1, x2 by the imager NIA's position resolver PR, optionally along with the incident angles, Θ1,Φ1 and Θ2,Φ2. The positional data and, optionally, the incident angles are provided to the PSF provider PP. The PSF provider PP uses a machine learning component MLC, such as a neural network, to predict the two PSFs, PSF1 and PSF2, one for gamma1 and one for gamma2. The corresponding PSFs, PSF1, PSF2, are provided to the reconstructor RECON for each gamma pair. The reconstructor RECON uses the PSFs PSF1, PSF2 to calculate a more accurate tube-of-response modelling which results in high(er) resolution PET imagery $I^{em}$.

The above description of the operation of the PSF provider PP applies equally for the other embodiments of observables $\mathcal{O}$, such as the list of activated detector elements, or the list of localized energy depositions.

Referring now in more detail to the point spread function PSF as computed and used herein, this may be understood in terms of conditional probability distributions. As mentioned earlier, the observable(s) $\mathcal{O}$ merely indicate the actual, detected energy depositions in the crystals, but not, in itself, the true position $P$ of first interaction on the crystal surface. However, it is the knowledge of the true gamma impact locations $P$ which are of interest for high resolution reconstruction of emission imagery.

This unknown relationship between location of first interaction P and the interaction observables $\mathcal{O}$ can be modeled by a probabilistic approach as envisaged herein. For example, the PSF as computed herein describes how the spatial point event of first interaction $P$ is spread out into probabilities across a number of activated photodiodes. The PSF may be conceptualized as a conditional probability distribution for the correct location $P$ (and optionally also of the impact direction $(\theta,\phi)$)of the first interaction of gamma on the proximal surface of the crystal, given the observable $\mathcal{O}$ :

$$PSF \sim \mathrm{Prob}(P,\ (\theta,\phi),\ |\ \mathcal{O}) \tag{1}$$

In other words, a given realization of the observable $\mathcal{O}$ (such as an observed set $\{X_i\}$ of activated detector element) can be produced by many different possible $P$ positions (and optionally with directions $(\theta,\phi)$), with a certain probability. This probability is described by the PFS (1).

As mentioned earlier, In an preferred embodiment, the observable $\mathcal{O}$ includes the list of indices ($X_i$) of some or all activated detector elements, in which case (1) can be written as:

$$PSF \sim \text{Prob}(P, (\theta,\phi), \mid \mathcal{O} = (X_i)) \qquad (1a)$$

Alternatively, the observable $\mathcal{O}$ includes some or all localized energy depositions $E_{X1},.. E_{Xj}, ...E_{XN}$ in the crystal as detected by all the activated detector elements, with $E_j$ the energy deposition in crystal with index $Xj$:

$$PSF \sim \text{Prob}(P, (\theta,\phi), \mid \mathcal{O} = E_{X1 ...} E_{Xj}, ...E_{XN}) \qquad (1b)$$

Thus (1b), is an augmented version of (1).

In a further alternative still, a simpler description may be called for in some embodiments, and the PSF may be written as:

$$PSF \sim \text{Prob}(P, (\theta,\phi), \mid \Sigma(\mathcal{O})) \qquad (1c)$$

$\Sigma$ as functional, such a statistic that summarizes the observable $\mathcal{O}$ in a single number or fewer numbers than required for the representing the observable $\mathcal{O}$ . The functional $\Sigma$ may thus provide a lower dimensional description of the, a possibly high-dimensional description of the observable $\mathcal{O}$ . $\Sigma$ may be average of the indices $(Xi)$, an or energy mean weighted average such as in the Anger logic, an average together with a standard deviation, or a center index and a radius defining a neighborhood around the pixel with the said center index to include some, all, or most activated detector elements. In other embodiments still, $\Sigma$ represents operation of singles processing unit.

In the above (1)(1a,b,c), the true position $P$ can represent any pixel position (crystal element index) on the scintillator SC's proximal surface, and in particular may assume any pixel position or inter-pixel position.

In embodiments, the incident angles $(\theta,\phi)$, can be ignored in (1),(1a,b,c) as the impact angles can be computed from the two observables $\mathcal{O}$ for the gammas in a pair. In other words, the incident angles are a function of, and hence determined by, the two observables $\mathcal{O}$ in gamma pair.

The above (conditional) probabilistic description (1),(1a,b,c) of the location of first interaction P results in a more accurate reconstruction. This is because using merely the estimated locations x as provided by the position resolver PR for example, runs the risk that the reconstruction algorithm, especially when configured to iteratively optimize an objective function, may end up trapped in local minima that represent wrong or inaccurate results. By taking a probabilistic approach for the TOR modeling with the proposed point spread functions PSF, the emission reconstruction is more likely to converge to a solution that represents imagery that more accurately and more realistically accounts for the observed projection imagery $\lambda$.

The reconstruction algorithms as envisaged herein can be formulated as an iterative procedure for improving the objective function. Specifically, the procedure may be formulated in terms of optimization, in particular minimization, of a cost function. The cost function measures how well the estimated imagery provided during the iterations matches the actually observed projection measurements $\lambda$. A system matrix is used to forward-project the reconstructed imagery into the projection domain and to estimate this predicted projection with the actually measured projection data $\lambda$. A deviation between the actually measured data $\lambda$ and the predicted projection as per the system matrix can be quantified by the cost function. In the iterations the predicted imagery is adapted to reduce the cost function, the algorithm thus converging towards the correct imagery. A dual formulation of the above described optimization is also contemplated which includes a maximization of a utility function.

The emission reconstruction models envisaged herein allow incorporation of the above described point spread functions for each detection event in the list of projection data $\lambda$. In more detail, an iterative emission imaging reconstruction algorithm can be described as follows (excluding any attenuation correction for simplicity):

$$\lambda = A[\dot{f}] \qquad (2)$$

$$f_{i+1}^{j} = G\left(f_i^{j}\right) \qquad (3)$$

$\lambda$ is the emission projection data in list or frame mode
$A$ is the system matrix that describes a forward projection from image domain into projection domain
$f^i$ is the $i$-th voxel in the imagery in emission image domain to be reconstructed

*G* is an update function that updated voxels *f* during the iterations *i*.

The nature of G depends on the optimization algorithm used. Embodiments of G include update functions based on any one or more of the following numerical methods or techniques: gradient descent, stochastic gradient method, conjugate gradient, Nelder-Mead expectation maximization (EM), maximum likelihood methods, or any other.

The goal is to adjust the voxel values to that the residue as per (2) $\|\lambda$-$A[f^i]\|$ becomes sufficiently small, for example drops under a pre-defined threshold.

The estimated PSFs may be incorporated into the system matrix A. For example, in embodiments, the system matrix is transformed into $A[f^i]$ - > $A^{PSF}[f^i]$, with entries computed based on the PSF of the relevant event data.

The reconstruction may be done in list-mode or in frame or sinogram mode.

In list mode, entries in the transformed, PSF based system matrix $A^{PSF}$ may be determined by using not one but plural LORs sampled according to the PSF for the respective event data, to so obtain or approximate the TOR for the given entry. In frame or sinogram mode, the event data is expressing as a matrix, or "projection image", and the PSF for the event datum of interest is then used to convolved the sinogram by using PSF as a kernel in a convolution operation "*".

The system matrix $A^{PS}$ may be compute one off, or on the fly, during reconstruction. In the latter case, there is no need to necessarily hold the whole of the matrix in memory. Only parts of the system matrix are ever computed when required during the reconstruction, to save memory space.

Iterative reconstruction schemes as may be used herein are described in

W. Wang "Systematic and Distributed Time-of-Flight List Mode PET Reconstruction", published in "2006 IEEE Nuclear Science Symposium Conference Record", 2006, pp 1715-1722.

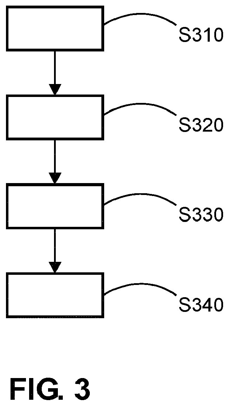

Reference is now made to a flow chart of Figure 3, which shows steps of the proposed method of supporting nuclear imaging. The steps in the method as described in the following implement the above described system in Figure 1 and 2. However, it will be understood that the method constitutes a teaching in its own right and is not necessarily tied to the systems described in foregoing Figures 1 and 2.

At step S310 event (interaction) data is received as recorded by a nuclear imaging apparatus such as a PET imager as shown above in Figure 1. The event data $\lambda$ represents interaction events of gamma radiation with a crystalline scintillator SC of detection device in the PET or other emission imager.

In step S320 a pre-trained machine learning component is used to process the event data into an associated point spread function PSF. The point spread function represents a conditional probability distribution that describes the location of first interaction of an incoming gamma photon involved in the interaction event, given measured observables (or a function thereof) such as photodetector responses coupled to the scintillator SC. The PSF may be 2D or 3D.

At step S330 a representation of the PSF is made available for some or each interaction datum.

At step S340, the PSFs made available at step S330, are processed in an emission imaging reconstruction algorithm to provide PET imagery in the image domain that can be displayed, stored or otherwise processed.

With reference to Figures 4A, B, there is shown a schematic block diagram of a computerized training system for training the machine learning component as used above. In embodiments mainly envisaged herein, the training system trains a machine learning model M. The machine learning model M includes initialized parameters p, and these parameters are then adapted based on the corpus C of training data.

The training data can be obtained by calibration measurements using the imaging apparatus NIA. Preferably, however, and less cumbersome, the training data is generated "artificially" by using a computerized simulator SIM.

Referring first to the simulation based embodiment SIM, the modeling of this is shown schematically in the top part of Figure 4A. The incoming gamma photon interacts at a proximal surface of the crystal block at the point of first interaction X. The $\gamma$ photon is incident in the direction of the imaginary line of response that can be quantified and defined by the polar co-ordinates $\phi$, $\theta$ as explained earlier. The gamma photon interacts with the crystalline structure through absorption and/or scattering, to cause the various energy depositions $E_i$, shown by a cloud of small circles in the top part of Figure 4A. Certain energy deposition result in a light photon, a light flash, and this is registered as described above by a photodiode. The simulation can be computed based on Monte Carlo methods as the manner of interaction of gamma photons with crystals are well understood, once the type of crystal and the specification of it is known. A suitable crystal envisaged includes Cerium doped Lutetium (LYSO), such as Lutetium-Yttrium Oxyorthosilicate, or others such as Bismuth Germanate (BGO) and Lutetium Oxyorthosilicate (LSO), or other.

In the simulation, the position data x and the angular data $\theta$,$\phi$ can be prescribed and these are varied in suitable increments and the simulation is repeated. The simulation results in a description of X in terms of observable events. The observable events are the localized energy values $Ei$ of all the light photons that were deposited in the crystal block due to the $\gamma$ photon impacting the crystal element at index X. It is these light photons that would be detectable by the photodiodes. There is no need to model the transducer, eg the photodiodes, themselves in this simulation, although this can still be done if required. Outside simulation, during use of the PET imager, the light photons would cause the set of photodiodes PHD to respond by issuing electrical signals. It is these electrical signals that would normally be processed by the position circuitry PS into the positional data that as an estimate x for the real location of first interaction $X$.

The PSF can be described as a two dimensional point spread function by projecting the energy depositions on a plane to obtain a collection of indices of all crystal elements in which depositions $E_i$ occurred. The projection plane is formed by the distal outward surface sections of the crystals. This 2D description can be refined as it is also known from the simulation where $(y,z)$ in the respective crystal x the respective energy deposition occurred. The 3D coordinates $(x,y,z)$ of each energy disposition are hence known and the 3D point spread function PSF can be represented as a 3D scalar field.

The simulation can be run by using Monte Carlo methods. Whilst Monte Carlo methods are preferred, other simulation techniques may also be used instead. In general, Monte Carlo ("MC") simulation uses repeated sampling to obtain statistical properties of some phenomenon, in this case the gamma versus crystal interaction. The manner of interaction in particular absorption and scattering is well understood in theoretical particle physics and there exist theoretical models in form of equations that describe these interactions. In the MC simulation, individual photons as pencil beams are simulated that start at a source. These are then tracked throughout the simulation until they are i) absorbed in the crystal, or ii) are scattered or iii) exit the simulation volume. Interactions of gamma photons with the crystalline material are probabilistic, and the probabilities and probability distributions are known from theory, these being a function of the photon energy, properties of the crystalline material, etc. A computing unit PU, preferably equipped with fast processors such as GPUs or other multicore processors starts the out and randomly selects a path for the photon from its current position to the next interaction, whilst this random selection is done according to the correct probability distribution. This is done for each photon until any of the above defined events i)-iii) occurs. This way, one knows for each photon that hits the detector exactly how many times it has interacted before. This tracking and simulation is done for a large number of simulated photons.

Repeated simulation can be run for a given gamma photon pencil beam with known $P$ and $(\theta,\phi)$ results in a gradual build up over the runs of a distribution of energy depositions.

The sampling from the theoretically known interaction probability distributions may be efficiently implemented using the Metropolis-Hastings algorithm (or variants thereof), first reported by N Metropolis et al in "Equation of State Calculations by Fast Computing Machines", Journal of Chemical Physics. 21 (6), pp 1087-1092.

The number of simulated gamma photons can be in order of $10^5$ or even $10^6$, or more.

An MC based simulation package for PET has been described by S Jan et al in "GATE: a simulation toolkit for PET and SPECT", published in Phys. Med. Biol. 49 (2004) 4543-4561.

Describing now operation of the simulator SIM in more detail, the MC simulation of the gamma-versus crystal-structure interactions can be rerun for a large number of trials for different locations of first impact $P = p_i$ on the surface of a model for the pixelated C1, C2 scintillator block. This includes rerunning the simulation for any fixed pi = P. P= pi is allowed to vary to preferably each pixel, or a suitable subset. For each P=pi, different incident angles at suitable angular increment (preferably up 360°) may be used, and again, a rerun is done of each fixed position $P$ and angles $(\theta,\phi)$. This results in a preferably large number of samples per triple $(P, (\theta,\phi))$, and associated observables as defined above. From these samples of observables, the PSF for different P's/angles $(\theta,\phi)$, given a certain realization of observable $\mathcal{O}$, can be computed.

The computation may be facilitated in embodiments by storing the simulation outcome, the various observables, in association with the respect P/angle that gave rise to the respective observable, as records in a database. A reverse lock-up may then be performed in relation to the records to obtain estimates of the conditional probability distributions

$$\text{PSF} = Y = \text{Prob}\,(P|\,\mathcal{O}).$$ In yet more detail, for each (or at least some) of the instances of the observable, $\mathcal{O}_i$, which in embodiments is a set of indices $(X_i)$ of activated detector elements or a distribution of energy depositions as discussed above, the database records are queried for positons P and angles $(\theta,\phi)$ that gave rise to the currently considered $\mathcal{O}_i$. The relative frequencies of the positions is then determined as fractions of the number of times each combination P=i and impact direction $(\theta_i,\phi_i)$ has been observed divided by the overall number of simulations. This reverse look-up with relative frequency determination results in an approximation of the conditional probability distribution

$$Yi = \text{Prob}(P, (\theta,\phi)|\,\mathcal{O}_i)$$ for the current instance $\mathcal{O}_i$. The reverse lookup-operation and frequencies determination is then repeated for a set of observables, preferably all simulated observables, to obtain a large pool of training data.

Alternatively, other sampling schemes may be used such as acceptance rejection methods, such as Bayes methods with Bayes rescaling based on known prior probability distributions to obtain the *Y's*.

It will be understood that the above described does not have to run for each of the two gammas as the results are symmetric and it is sufficient to run the simulations for one gamma only.

The above described processing of the simulation results in training data $C$ that may be used for training the machine learning component MLC. The collection $\mathcal{L}_i$ of the training data items may be written as:

$$\mathcal{L}_i = (\ell_i, Y_i) = ((\mathcal{O}_i, (\theta, \phi)), Y_i = \mathrm{Prob}(P, (\theta, \phi) \mid \mathcal{O}_i)) \qquad (4)$$

wherein $\mathcal{O}_i$ is a realization of the observable $\mathcal{O}$ associated with the PSF $Y_i = \mathrm{Prob}(P \mid \mathcal{O}_i)$. As mentioned above, the impact angles are obtained through the simulation or computed from the $P$'s for the two gammas. The representation $Y_i$ of PSF may be in 2D or 3D, and the observable $\mathcal{O}$ may have any of the above described structure, such as single scalar estimate, or a list of activated detector elements $X_i$, a binary image, or preferably including the energy values, preferably in the form of an energy image, etc.

The specific format of $\mathcal{O}_i$ in training data item ("datum") $\mathcal{L}_i$ may depend on the format in which the projection data $\lambda$ are to be provided by the imager NIA for which the PSF provider PP is to be used, later when the machine learning component is deployed. If the format/or semantics differ, suitable translator or transformer middleware may be used later during deployment post-training to adapt the projection data $\lambda$ for input into the pre-trained machine learning component MLC.

The number of event data items $\mathcal{L}_i$ that make up the training corpus C can run into the hundreds or thousands. The corpus C may be held in a memory.

As an alternative to the simulation SIM described above, the training data may instead be obtained by calibration measurements. In this embodiment, a quasi-pencil beam gamma source is placed into the center say of the examination region A and a gamma ray in a prescribed direction is fired against different portions of the simulator at known locations of impact, with photodiode responses recorded in association with said direction and position to so obtain experimental training data. However, this experimental procedure is likely to be cumbersome and time consuming so the artificial generation by computer simulation as described above based is preferred.

Operation of the computerized training system TS will now be explained in more detail in Figure 4B. The system TS can be implemented on one or more computing units, preferably equipped with GPUs or other multicore microprocessors or of any other architecture that facilitates parallel data processing.

In general, the machine learning approach for present PSF estimation purposes may be understood as follows: there is a latent, possibly highly complex, or, even if known, computationally intractable, mapping $L$: (event data, co) -> PSF($\omega$). The mapping $L$ maps event data to an associated PSF. The PSF is the probability distribution of the location of first crystal contact $P$ defined on the proximal surface of the crystal. This mapping depends on a large number of factors, conceptualized as "$\omega$". It is an object in machine learning to learn a model for L from data, without the need for explicit knowledge of the $\omega$'s. The knowledge on the role of $\omega$'s and of the mapping $L$ is implicitly "encoded" in the parameters of the machine learning model, suitably adjusted based on the training data.

In more detail, the machine learning model M, such as a neural network, can be understood as a structure that incorporates initially a number of pre-assigned parameters $p$. The parameters $p$ may be of high dimension in the order or $10^4$ or $10^6$. A first data item $\mathcal{L}_i$ from the corpus of training data sets is received at input port IN of training system TS. A supervised ML training schemes are mainly envisaged herein. Each data item $\mathcal{L}_i$ may be broken down in training input data $\ell_i = (\mathcal{O}_i, \mathcal{L}_i, (\Theta_i, \phi_i))$ and the associated target $Y_i$.

A tester TT then applies the training input data of data item $\ell_i$ to the machine learning model, $M^p$ given a current parameter set $p$. In the data set $\mathcal{L}$ the observable $\mathcal{O}_i$, and directional data $\theta_i, \phi$ are considered as training input data, whilst the PSF distributions $Y$ are treated as target. The model $M^p$ responds and outputs training output data $M^p(\ell_i)$. The training output data $M^p(\ell_i)$ is an estimate for target $T = Y_i$ and the two will in general differ and an error or residue is obtained. The training output data $M^p(\ell_i)$ is compared with Y by an up-dater UD. The comparison can be done by an objective function $F^p$. The objective function $F^p$ done formulated based on any suitable measure, such as (squared) Euclidian distance or any other $L_p$ norm, or other measure as appropriate. The up-dater US then updates the current set of parameters p, for a new set of parameters p', based on the (current) residue $\|M^p(\ell_i) - Y_i\|$, in an attempt to improve the objective function $F^p$. The objective function may be considered a cost function, and the optimization task is to adjust the parameter so as to reduce the cost. The updating can be done in one or more iterations in an inner loop IL for the currently considered data training item $\ell_i$.

Once sufficient convergence has been established, for instance once $F^p$ drops under a threshold, the system enters the outer loop OL and request a next data $\ell_{i+1}$ and this is processed accordingly, except that now, at the updater stage UD, the objective function F$^p$ will consider in addition to the current residue, the sum of residues of some or all previously processed training data item $\ell_{j\leq i+1}$: $F^p = \Sigma_j \| M^p(\ell_j) - Y \|$ In this manner, it can be assured that all of the training data C is taken into account when optimizing (eg, minimizing) the cost function to obtain good generalization capabilities of the network M by avoiding overfitting and.

After a number of pre-set iterations or once the overall accumulated cost function Fp has dropped under a certain threshold will all or a sufficient number of training data items $\ell_i$ processed, the machine learning model $M^p$ is considered fully trained and the current set of parameters p is fixed. The fully trained model is then stored in memory MEM.

The machine learning model is now ready for deployment and can be used to process newly received, "real" detection data provided by the PET machine NIA during acquisition that the model M has never "seen" before and produce a good estimate of the point spread function PSF as a conditional probability distribution as described above.

The machine learning model is preferably a neural network comprising an input layer, and output layer and, in between two, three or more hidden layers. The layers may be structured into vectors, matrices or tensors, the latter being a "super matrix" with more than two indices. In general, in non-recurrent networks, the number of hidden layers represents the "deepness" of the network.

The input layer is adapted in size and shape to receive the triple ($\mathcal{O}_i$, ($\theta_i$, $\phi_i$) so could be in the simplest case represented as a 3-vector. If x is provided as vector or matrix, the input layer may need to be dimensioned accordingly.

The output layer is either matrix or a tensor, depending on whether the PSF estimate is 2D or 3D, respectively.

The hidden layers may include only fully connected layers, only convolutional layers or a combination of both, convolutional and fully connected layers. If the positional data is described in 2D this akin to an image and some or all of the layers can be convolutional layers. In this case the model is at least partly a convolutional neural network ("CNN"). CNNs as a type of artificial neural networks have been observed to yield good results for image like data. If, however, the positional data x comprise only a single or few numbers, this lead to sparse data problems and it is preferred to encode the input data $x_i$, ($\theta_i$, $\phi_i$) suitably first by using embedding-techniques such one-hot-key-encodings or similar embedding schemes. The embedded input data may then be fed preferably into one or more fully connected sequence of neural network layers. This may be followed by other convolutional layers if required. Other layer types may include pooling layer, deconvolutional layers, drop-out layers, activation layers, all envisaged herein in all different combination and sub-combinations. In embodiments, the hidden layer comprises a sequence of 1, 2 or 3 fully connected layers.

If a neural network architecture is used for the model, the tester TT and updater UD may cooperate or are consolidated into a single module to implement the forward-backward propagation algorithm to adjust the weights p of the network M. Other gradient-descent methods for optimization are also envisaged and so are non-gradient based methods.

Each layer comprises nodes that receive input from nodes in previous layer and provide output to be provided as input to nodes of the following layer. Signal flow from layer to layer is through inter-nodal connections between nodes of different layers. Each connection has a weight, a number. The collection of all weights are the parameters p for NN type models M. The optimization task in NN ([artificial] neural network) type models is to adjust the weights to improve the cost function. collection of all weights. In NN, the tester TT applies the input ($\mathcal{O}_i$, ($\theta_i$, $\phi_i$) to the input layer to be propagated through the hidden layers to obtain at the output layer an estimate for the PSF.

Reference is now made to the flow chart in Figure 5 which shows a method of training the above described machine learning model for estimation of point spread functions for use in emission imaging, in particular PET. Again, the method is not necessarily tied to the architecture of Fig 4B, and may be practiced in other arrangements or systems.

In step S510 a current data set is received. The training data set $\mathcal{L}_i$ comprises a pair, one member of the pair being positional and directional data whilst the other member Y, the target, is an estimate of the point spread function in terms of energy distribution as may be registerable at a set of photodiodes. The energy distribution can be 2D and 3D.

The training data can be obtained through simulation S610 by using Monte Carlo method. The simulation is one of gamma versus crystal interaction. A position of first interaction on a surface of a model of the scintillator crystal is varied and so is the directional data for each of the positions of first interaction. The initial impact position P and the direction of impact is adapted in increments. The simulation of a given position and direction is rerun for a gamma to obtain instances of observable such as distributions of respective in-crystal energy deposition distributions as observable. The gamma is preferably modelled in pencil bream geometry. In step S620, a family of PSFs are estimated at step S620, one for some or each instance of the observable. The estimation proceeds by fixing in turn, some or each the said instances $\mathcal{O}$. Then, for a given fixed observable, $$\mathcal{O} = \mathcal{O}_i,$$ subsets of said locations are analyzed into bins of a histogram or by computing fractions of P's that resulted in the said fixed observable, to obtain an estimate $$\mathcal{O}_i, \rightarrow (\hat{p}_j),$$

for a PSF for the given instance $\mathcal{O}_{\check{z}}$ , with $\hat{p}_j$) representing the relative frequencies of the P's. Step S620 is repeated for each of some of the other instances to obtain a family of PSF, each $PSF_i$ associated to a respective instance $\mathcal{O}_{\check{z}}$ . The above can be refined by distinguishing each P by the respective direction $\theta_i$, $\phi_i$ of impact, to obtain a refined family of PSFs, some or each $PSF_i$ associated, not only with a certain instance of the observable, $\mathcal{O}_{\check{z}}$ ,, but in addition with a respective direction ($\theta_i$, $\phi_i$). The training data so obtained comprises ($\mathcal{O}_{\check{z}}$ , ($\theta_i$, $\phi_i$), ($PSF_i$ = $Y_i$)).

The simulation may be general but is preferably specific and based on a specification of the crystalline material and structure. The crystal preferably corresponds or is at least similar to the scintillator material as used in the emission imager machine of interest.

The training data items is applied to a machine learning model at step S520. In particular, the observable instant $\mathcal{O}_{\check{z}}$ and directional data are input as training input data into the machine learning model. The machine learning model, given a current set of parameters, processes the training input data and produces a training output.

At step S530 the training output as per step S520 is compared with the associated target *Y*. Based on a deviation or residue, between the two, the parameters are updated in one or more iteration in an inner loop to improve an objective function.

Once sufficient convergence is achieved, the method returns to step S510 to enter an outer loop to process a newly considered training data item pair which is processed similarly, except now at stage S530 it is the sum of residues of some or all previously processed training data items that are now considered, in addition to the current residue at step S530 to decide on the parameter adaptation of the machine learning model. The sum of residues are compared in the objective function, using a suitable measure such as squared Euclidean distance, or any other suitable measure.

The training method hence includes two loops, one nested into the other, the outer loop OL and the inner loop IL. Once a sufficient number or all data items have been processed and sufficient convergence has been achieved, the model is considered fully trained and can be output for deployment. As in the case of the fully trained PSF provider, the training system is preferably implemented on a computing system PU including one or more multi-core processors, such as a GPU8(s), or other processor types that facilitate parallel processing,

Components of the PSF provider PP or of the training system TS may be implemented as one or more software modules, run on a general purpose computing unit PU such as a workstation associated with the imager NIA, or on a server computer associated with a group of imagers arranged in a distributed architecture and connectable in a suitable communication network. Alternatively, some or all components may be arranged in hardware such as a suitably programmed microcontroller or microprocessor, such an FPGA (field-programmable-gate-array) or as a hardwired IC chip, an application specific integrated circuitry (ASIC), integrated into the imaging system NIA. In a further embodiment still, the fault checker may be implemented in both, partly in software and partly in hardware. One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. System (PP) for supporting nuclear imaging, comprising:

    an input interface (IN) for receiving event data that represents an interaction of gamma-radiation with a scintillator (SC) of a nuclear imaging apparatus (NIA);
    a pre-trained machine learning component (MLC) for estimating a point spread function, PSF, for the said event;

    an output interface (OUT) for outputting a representation of the PSF.

2. System of claim 1, comprising a reconstruction module (RECON) operable to implement a reconstruction algorithm to reconstruct from plural such event data and their estimated PSFs, an emission image.

3. System of claim 1 or 2, wherein the pre-trained machine learning component includes a neural network model (M).

4. System of any one of the previous claims, wherein said event data includes least one observable ( $\mathcal{O}$ ) that represents in-scintillator interaction of a gamma radiation.

5. System of any one of the previous claims, wherein the PSF representation is 2-dimensional or 3-dimensional.

6. System of any one of the previous claims, wherein the reconstruction algorithm includes tube-of-response modelling based on the PSF.

7. A nuclear imaging arrangement (NIR) comprising:

    system (PP) of any one of the previous claims;
    the nuclear imaging apparatus (NIA).

8. System (TS) for training a machine-learning component for supporting nuclear imaging, comprising:

    input interface (IN) for receiving training input event data representative of gamma-radiation interaction with scintillator material;
    a tester (TT) for applying the training input event data to a machine learning model to obtain training output data;
    an updater (UD) configured to update one or more parameters of the model based on a deviation between the training output data and a target associated with the input event data, the target representing an expected PSF.

9. System of claim 8, the training input event data previously obtained, based on measurement or simulation.

10. System of claim 9, wherein the simulation is based on a Monte-Carlo-simulation algorithm.

11. Method for supporting nuclear imaging, comprising:

receiving (S310) event data that represents an interaction of gamma-radiation with a scintillator (SC) of a nuclear imaging apparatus (NIA);
estimating (S320), based on a pre-trained machine learning component (MLC), a point spread function, PSF for the said event;
outputting (S330) a representation of the PSF.

12. Method of training a machine-learning component for supporting nuclear imaging, comprising:

receiving (S510) training input event data representative of gamma-radiation interaction with scintillator material;
applying (S520) the training input event data to a machine learning model to obtain training output data;
adjusting (S530) one or more parameters of the model based on a deviation between the training output data and a target associated with the input event data, the target representing an expected PSF.

13. Method of generating training data for training a machine-learning component for supporting nuclear imaging, comprising:

simulating (S610) gamma photon versus scintillator interactions to obtain, for a set of prescribed locations ($P=p_i$)

of first gamma-phono versus scintillator interaction, instances of an observable ($\mathcal{O}_i$); and

estimating (S620), based on a given one of the said instances ($\mathcal{O}_i$), a distribution of said prescribed locations ($P=p_i$) to obtain a representation of a PSF for the given one of said instance.

14. A computer program element, which, when being executed by at least one processing unit (PU), is adapted to cause the processing unit (PU) to perform the method as per any one of claims 11-13.

15. At least one computer readable medium having stored thereon the program element of claim 14.

**FIG. 1A**

**FIG. 1**

**FIG. 2**

FIG. 3

**FIG. 4A**

**FIG. 4B**

S610    S620

S510

S520

IO

OL

S530

**FIG. 5**

Europäisches
Patentamt

European
Patent Office

Office européen
des brevets

# EUROPEAN SEARCH REPORT

Application Number

EP 19 21 5109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/082212 A1 (FAIVISHEVSKY LEV [IL] ET AL) 22 March 2018 (2018-03-22) * paragraphs [0025], [0037], [0075] - [0079]; figures 3, 7-9 * ----- | 1,3,11, 14,15 | INV. G01T1/161 G01T1/17 |
| X | WO 2015/134662 A2 (UNIV COLUMBIA [US]; MIKHNO ARTHUR [US] ET AL.) 11 September 2015 (2015-09-11) | 1,2,7, 11,14,15 | |
| Y | * paragraphs [0120] - [0134], [0170], [0360], [0435] - [0439], [0466] - [0477]; figures 75, 80 * ----- | 6 | |
| X | US 5 576 548 A (CLARKE LAURENCE P [US] ET AL) 19 November 1996 (1996-11-19) * figures 1, 3-5, 7(b) * * column 3, line 58 - column 11, line 67 * * column 13, lines 50-62 * ----- | 1,5,11, 14,15 | |
| X | US 2015/065854 A1 (AHN SANGTAE [US] ET AL) 5 March 2015 (2015-03-05) * paragraphs [0037], [0042]; figure 1 * ----- | 1,4,11, 14,15 | |
| Y | EP 3 534 184 A1 (GENERAL EQUIPMENT FOR MEDICAL IMAGING S A [ES] ET AL.) 4 September 2019 (2019-09-04) * paragraph [0002] * ----- | 6 | TECHNICAL FIELDS SEARCHED (IPC) G01T |
| X | US 2018/144465 A1 (HSIEH JIANG [US] ET AL) 24 May 2018 (2018-05-24) * paragraphs [0246], [0249], [0254] - [0255]; figure 25B * ----- | 8-10,12 | |
| X | WO 2014/064295 A1 (UNIV GENT [BE]) 1 May 2014 (2014-05-01) * page 25, lines 12-17 * * page 28, lines 3-7 * ----- | 13 | |

The present search report has been drawn up for all claims

| Place of search | Date of completion of the search | Examiner |
|---|---|---|
| The Hague | 12 June 2020 | Johnstone, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

Application Number

EP 19 21 5109

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

    1. claims: 1-7, 11(completely); 14, 15(partially)

        System and method for supporting nuclear imaging.
           ---

    2. claims: 8-10, 12(completely); 14, 15(partially)

        System and method for training a machine learning component for supporting nuclear imaging.
           ---

    3. claims: 13(completely); 14, 15(partially)

        Method of generating training data for a machine learning component for supporting nuclear imaging.
           ---

## ANNEX TO THE EUROPEAN SEARCH REPORT
## ON EUROPEAN PATENT APPLICATION NO.

EP 19 21 5109

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2020

| Patent document cited in search report | | Publication date | Patent family member(s) | | Publication date |
|---|---|---|---|---|---|
| US 2018082212 | A1 | 22-03-2018 | EP 3516597 A1 | | 31-07-2019 |
| | | | US 2018082212 A1 | | 22-03-2018 |
| | | | WO 2018057180 A1 | | 29-03-2018 |
| WO 2015134662 | A2 | 11-09-2015 | EP 3125765 A2 | | 08-02-2017 |
| | | | US 2017039706 A1 | | 09-02-2017 |
| | | | WO 2015134662 A2 | | 11-09-2015 |
| US 5576548 | A | 19-11-1996 | US 5576548 A | | 19-11-1996 |
| | | | WO 9639642 A1 | | 12-12-1996 |
| US 2015065854 | A1 | 05-03-2015 | NONE | | |
| EP 3534184 | A1 | 04-09-2019 | EP 3534184 A1 | | 04-09-2019 |
| | | | ES 2672118 A1 | | 12-06-2018 |
| | | | WO 2018078203 A1 | | 03-05-2018 |
| US 2018144465 | A1 | 24-05-2018 | CN 110114834 A | | 09-08-2019 |
| | | | EP 3545525 A1 | | 02-10-2019 |
| | | | JP 2020500378 A | | 09-01-2020 |
| | | | US 2018144465 A1 | | 24-05-2018 |
| | | | US 2019220975 A1 | | 18-07-2019 |
| | | | WO 2018098077 A1 | | 31-05-2018 |
| WO 2014064295 | A1 | 01-05-2014 | EP 2912491 A1 | | 02-09-2015 |
| | | | US 2015276953 A1 | | 01-10-2015 |
| | | | WO 2014064295 A1 | | 01-05-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. M. MITCHELL.** Machine Learning. McGraw-Hill, 1997, 2
- **W. WANG.** Systematic and Distributed Time-of-Flight List Mode PET Reconstruction. *2006 IEEE Nuclear Science Symposium Conference Record,* 2006, 1715-1722
- **N METROPOLIS et al.** Equation of State Calculations by Fast Computing Machines. *Journal of Chemical Physics,* vol. 21 (6), 1087-1092
- **S JAN et al.** GATE: a simulation toolkit for PET and SPECT. *Phys. Med. Biol.,* 2004, vol. 49, 4543-4561